# EUROPÄISCHE PATENTSCHRIFT

(11) **EP 2 346 635 B1**
(45) Veröffentlichungstag und Bekanntmachung des Hinweises auf die Patenterteilung: **14.01.2015**
(21) Anmeldenummer: 09782145.8
(22) Anmeldetag: 25.08.2009
(51) Int. Cl.: B23D 29/00

(54) **BOHRMASCHINENVORSATZ**
DRILL ATTACHMENT
ADAPTATEUR POUR MACHINE À PERCER

(30) Priorität: 18.09.2008 DE 202008012415 U
(43) Veröffentlichungstag der Anmeldung: 27.07.2011
(73) Patentinhaber: Weidmüller Interface GmbH & Co. KG, 32758 Detmold (DE)
(72) Erfinder: BRÖKER, Thilo, 32758 Detmold (DE); DIERKS, Christoph, 32760 Detmold (DE)
(74) Vertreter: Specht, Peter
(86) Internationale Anmeldenummer: PCT/EP2009/060911
(87) Internationale Veröffentlichungsnummer: WO 2010/031658

(56) Entgegenhaltungen:
- EP-A- 1 525 958
- DE-U1- 9 117 126
- US-B1- 6 178 643

## Beschreibung

Die vorliegende Erfindung betrifft einen Bohrmaschinenvorsatz zum Schneiden von Kabeln gemäß dem Oberbegriff des Anspruchs 1.

Ein gattungsgemäßer Bohrmaschinenvorsatz ist aus der EP 1525958 A1 bekannt. Dabei ist der Bohrmaschinenvorsatz so ausgebildet, dass er ein Gehäuse aufweist, eine erste und zweite Schneideinheit, welche sich relativ zueinander bewegen sowie mindestens eine der Schneideinheiten antreibende Antriebseinheit mit einer um ihre Längsachse rotierbar gelagerten Antriebswelle, die aus dem Gehäuse herausragt, um in das Futter einer Bohrmaschine eingespannt zu werden. Die Antriebseinheit besteht hier aus einem Schneckengetriebe, wobei die Schnecke auf der Antriebswelle montiert ist und mit der Antriebswelle auf einer ersten Achse rotiert. Das Schneckengetriebe ist auf einer Schneckengetriebeachse montiert, die eine Antriebseinheit antreibt, welche während des Betriebs mit mindestens einer der Schneideinheiten im Eingriff steht, um diese eine Schneide relativ zu der anderen Schneide zu bewegen. Mindestens eine der Schneideinheiten weist an einer Außenseite ein Zahnsegment auf, in das die Antriebseinheit eingreift. Des Weiteren weist dieser Bohrmaschinenvorsatz einen Drehmomentarm auf, der mit einem Ende am Gehäuse und mit dem anderen Ende am Handgriff der Bohrmaschine befestigt ist, um eine Relativdrehung des Gehäuses zur Bohrmaschine zu verhindern.

Aus der US 6 178 643 B1 ist gleichfalls ein gattungsgemäßer Bohrmaschinenaufsatz für eine Bohrmaschine bekannt. Das Werkzeug weist eine relativ aufwändige Mechanik auf mit einem Exzenter, einer Vielzahl von Hebeln und einer Transportklinke, so dass sich der der Bohrmaschinenaufsatz insgesamt durch einen relativ komplizierten Aufbau auszeichnet.

Aus der DE 91 17 126 U1 ist ein handbetätigter Ratschenschneider, insbesondere zum Schneiden von Kabeln bekannt, der eine relativ aufwendige Mechanik aufweist.

Nachteilig an dem gattungsgemäßen Bohrmaschinenvorsatz ist der hohe bauliche Aufwand und das vergleichsweise hohe Gewicht des Bohrmaschinenvorsatz durch den Einsatz des Schneckengetriebes. Außerdem kann bei einer eventuell auftretenden Verklemmung der Schneideinheiten und eines dazwischen eingeklemmten Kabels die Verklemmung des Bohrmaschinenvorsatzes nur durch Umschalten der Bohrmaschine in die entgegen gesetzte Drehrichtung gelöst werden. Dabei könnte unter Umständen der Schneckenantrieb und/oder das Zahnsegment an der Schneideinheit beschädigt werden.

Aufgabe der vorliegenden Erfindung ist es, einen Bohrmaschinenvorsatz mit einem noch weiter vereinfachten Antriebsmechanismus zum Antrieb der Schneideinheiten mit einem vergleichsweise geringen Gewicht zu entwickeln.

Diese Aufgabe wird durch einen Bohrmaschinenvorsatz mit den Merkmalen des Anspruchs 1 gelöst.

Weitere vorteilhafte Ausbildungen der Erfindung sind in den Unteransprüchen gekennzeichnet.

Bei den erfindungsgemäßen Bohrmaschinenvorsatz wird die Drehbewegung der Antriebswelle in eine Translationsbewegung einer Transportklinke umgewandelt, welche sich alternierend entlang einer Verschiebungsachse bewegt und dabei mindestens eine der Schneideinheiten antreibt.

Durch die Verwendung eines Kurbelantriebs zur Umwandlung der Drehbewegung der Antriebswelle in eine Translationsbewegung der Transportklinke wird mit einer einfachen und störunanfälligen Mechanik der Vortrieb mindestens eines der Schneidmesser bewerkstelligt.

Die drehbare Anordnung der Transportklinke auf einen von den Kurbelantrieb beziehungsweise dem Kurvenscheibenantrieb angetriebenen Gleitstücks ermöglicht, dass die Transportklinke stets sicher mit der Verzahnung der angetriebenen Schneideinheit im Eingriff steht.

Die sichelförmige Ausbildung der zweiten Schneideinheit mit innen liegender Schneidkante und außen liegender Verzahnung ermöglicht eine zuverlässige Kraftübertragung von der Transportklinke auf die zweite Schneideinheit.

Zu Verhinderung einer unbeabsichtigten Bewegung der zweiten Schneideinheit entgegen einer Schubrichtung der Transportklinke weist die Antriebseinheit des

Weiteren eine Sperrklinke auf, welche die Schneideinheit nach einem Vorschub in dieser Position hält.

Die Anordnung eines Rückstellglieds zwischen Sperrklinke und Transportklinke gewährleistet eine einfache mechanische Rückstellung von Transport- und Sperrklinke in eine Ausgangsstellung.

Vorteilhaft ist außerdem, dass das Rückstellglied gleichzeitig die Transportklinke gegen die Verzahnung der zweiten Schneideinheit drückt.

Durch die Anordnung eines Andruckelements wird auch die Sperrklinke zuverlässig gegen die Verzahnung der zweiten Schneideinheit gedrückt.

Da die Ausrichtung der Verzahnung an der zweiten Schneideinheit dergestalt ist, dass eine von der Transportklinke auf die Verzahnung ausgeübte Kraft nur in Schneidrichtung der zweiten Schneideinheit ausübbar ist, ermöglicht es ein Abgleiten der Transportklinke beim Rücklauf über den Zahnrücken zum nächsten Zahn der Verzahnung.

Durch die Ausbildung eines Hebels an dem Gehäuse, der drehbar an diesem und an der ersten Schneideinheit exzentrisch auf einen zweiten Drehpunkt gelagert ist, kann mithilfe dieses Hebels die gesamte Schneideinheit gegenüber dem Gehäuse derart verschoben werden, dass die Verzahnung der zweiten Schneideinheit außer Eingriff mit der Antriebseinheit stellbar ist. Dadurch ist eine einfache und die Verzahnung schonende Unterbrechung eines Schneidvorgangs im Falle eines Fehlschnitts ermöglicht.

Eine an dem Vorsatz axial zur Antriebswelle angeordnete Stützhülse gewährleistet eine sichere Drehmomentabstützung des Vorsatzes gegenüber der den Vorsatz antreibenden Bohrmaschine.

Nachfolgend werden Ausführungsbeispiele anhand der beigefügten Zeichnungen beschrieben. Es zeigen:
- Figur 1: eine schematische Draufsicht auf eine Vorderseite einer Ausführungsform eines Bohrmaschinenvorsatzes,
- Figur 2: eine schematische Draufsicht auf eine Rückseite einer Ausführungsform des Bohrmaschinenvorsatzes,
- Figur 3: eine schematische Detailansicht der Antriebseinheit mit einem Kurbelantrieb,
- Figur 4: eine schematische Detailansicht der Antriebseinheit mit einem Kurvenscheibenantrieb, die nicht unter den Anspruch 1 fällt;
- Figuren 5 bis 7: perspektivische Ansichten des Gehäuses und der Schneideinheiten beim außer Eingriff bringen und
- Figuren 8 bis 11: Schnittansichten einer Ausführungsform des Bohrmaschinenvorsatzes in verschiedenen Vorschubpositionen der zweiten Schneideinheit.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position des Bohrmaschinenvorsatzes. Diese Begriffe sind nicht einschränkend zu verstehen, d.h. in verschiedenen Arbeitsstellungen oder durch spiegelsymmetrische Auslegung oder dergleichen können sich diese Bezüge ändern.

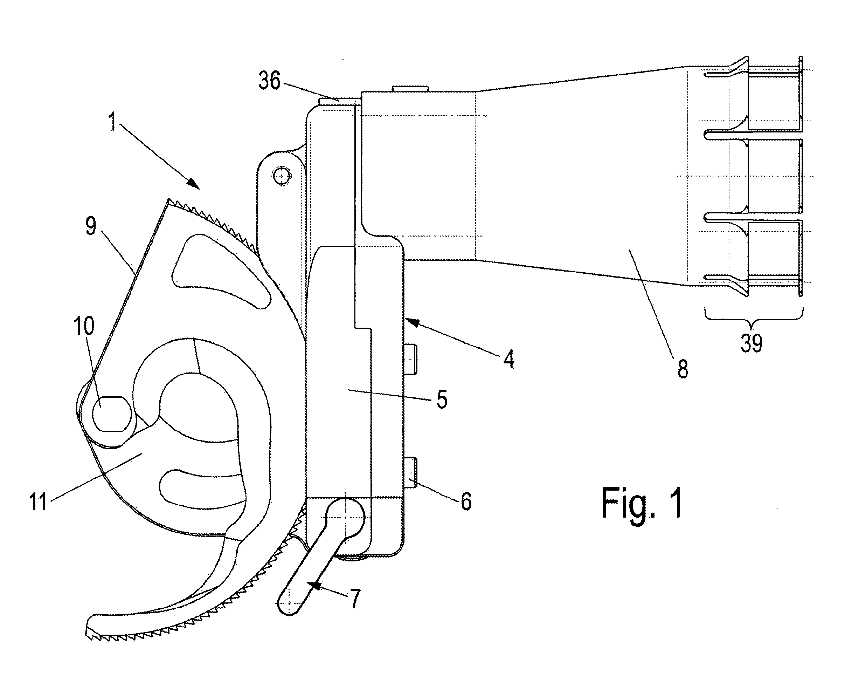

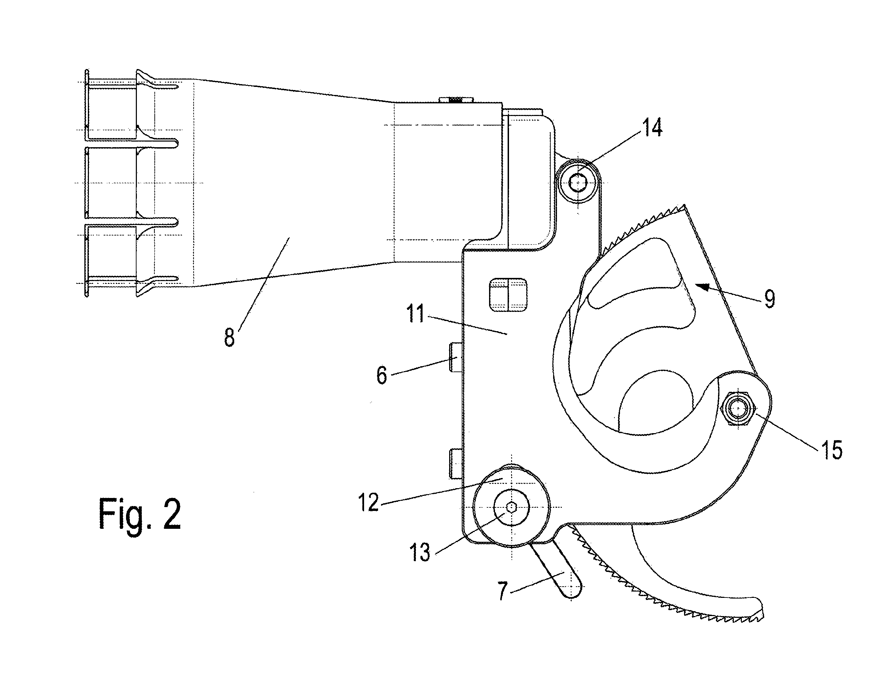

In den Figuren 1 und 2 ist eine Vorder- beziehungsweise Rückansicht eines erfindungsgemäßen Bohrmaschinenvorsatzes 1 gezeigt, welcher ein Gehäuse 4, 5, eine Antriebseinheit 30, zwei Schneideinheiten 9, 11 sowie eine Stützhülse 8 aufweist.

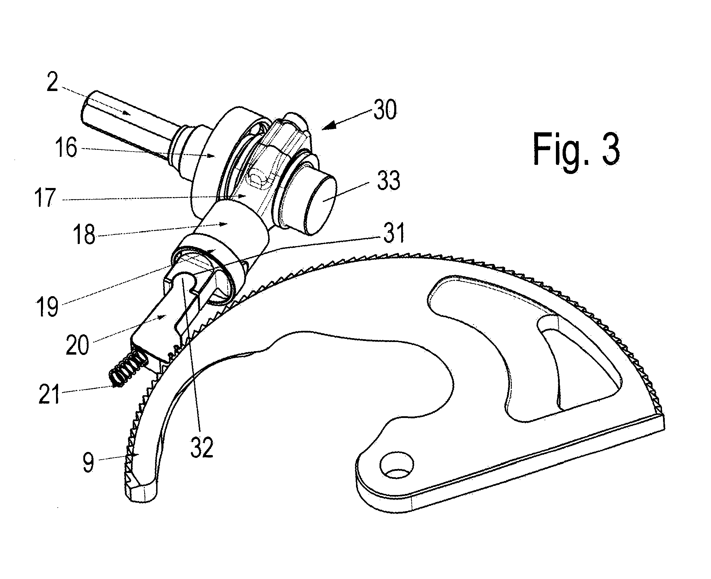

Zentrales Element des Antriebs ist eine beispielsweise in Figur 3 gezeigte Antriebswelle 2. Diese ist über ein Kugellager 16, bevorzugt über zwei Rillenkugellager, in den beiden Gehäuseteilen 4, 5 gelagert. Die beiden Gehäuseteile 4, 5 sind über Passschrauben 6 zueinander ausgerichtet und fixiert.

Zur Drehmomentabstützung des Bohrmaschinenvorsatzes gegenüber der Bohrmaschine ist axial zur Antriebswelle 2 eine Stützhülse 8 um die Antriebswelle herum an dem Vorsatz 1 angeordnet. Die Stützhülse 8 ist an ihrem von dem Vorsatz abgewandten Ende als Klemmteil 39 zum Festklemmen der Stützhülse 8 an einer Bohrmaschine ausgebildet. Beim Anbringen des Bohrmaschinenvorsatzes 1 an einer Bohrmaschine wird die Stützhülse 8 zusammen mit dem Vorsatz 1 über ein Bohrfutter der Bohrmaschine geschoben und bevorzugt mit einer das Klemmteil 39 zusammen drückenden (nicht gezeigten) Spannschelle an der Bohrmaschine fest geklemmt und gesichert. In einer besonderen Ausführung wird in das Bohrfutter der Bohrmaschine zunächst eine (nicht gezeigte) Antriebshülse eingespannt. In diese Antriebshülse wird während des Aufschiebens der Stützhülse 8 und des Bohrmaschinenvorsatzes 1 über das Bohrfutter der Bohrmaschine die Antriebswelle 2 des Bohrmaschinenvorsatzes 1 eingeschoben, so dass auf diese Weise ein Drehmoment von der Bohrmaschine auf die Antriebswelle 2 übertragen werden kann.

Bevorzugt ist die erste Schneideinheit 11 als Festmesser und die zweite Schneideinheit 9 als Schwenkmesser ausgeführt. Die zweite Schneideinheit 9 ist bevorzugt über einen in der ersten Schneideinheit 11 eingeschraubten und zusätzlich mit einer Mutter 15 gekonterten Bolzen 10 drehbar gelagert. Die erste Schneideinheit 11 wiederum ist über eine Passschraube 14 drehbar am Gehäuse 5 gelagert.

Beide Schneideinheiten 9, 11 sind bevorzugt sichelförmig mit innenliegenden Schneidkanten 37, 38 ausgeführt. Dreht man die zweite Schneideinheit 9 auf die erste Schneideinheit 11 zu, so verengt sich die Öffnung zwischen den beiden Schneidkanten 37, 38, so dass ein in dieser Öffnung liegendes Kabel durch vollständiges Schließen der Öffnung durchtrennt wird. Zumindest die zweite Schneideinheit 9 weist des weiteren an ihrer Außenkante eine Verzahnung 28 mit bevorzugt in gleichen Abständen aufgereihten Zähnen 29 auf.

Ein Exzenter 7 mit einer Kulisse 22 bildet die bewegliche Befestigungsstelle der Schneideinheiten 9, 11 zum Gehäuse 4, 5 zum außer Eingriff nehmen der Schneideinheiten 9, 11.

Die Antriebseinheit 30 weist neben einer um ihre Längsachse rotierbar in dem Gehäuse gelagerten antreibbaren Antriebswelle 2 mindestens eine translatorisch alternierend bewegbare Transportklinke 20 auf, die mit mindestens einer der Schneideinheiten 9, 11 in Wirkverbindung steht, um die Schneideinheiten 9, 11 relativ zueinander zu bewegen.

Dazu ist die Transportklinke 20 auf ihrer der Schneideinheit 9, 11 zugewandten Seite ebenfalls mit einer Verzahnung versehen, so dass die Transportklinke 20 mit der Schneideinheit 9, 11 während eines Schneidvorganges formschlüssig ineinander eingreifen.

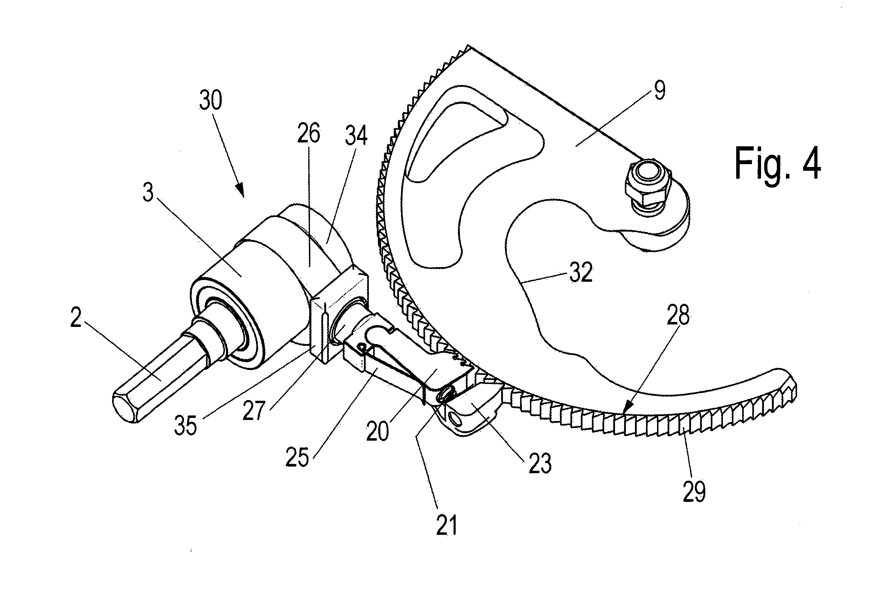

Zur Übersetzung des Antriebsmomentes von der in das Bohrmaschinenfutter eingespannten Antriebswelle 2 auf die Transportklinke 20 sind zwei Mechanismen vorgeschlagen: zum einen ein Kurbelantrieb, zum anderen ein Kurvenscheibenantrieb, welche im folgenden unter Bezugnahme auf die Figuren 3 bzw. 4 näher beschrieben werden.

Bei der Verwendung eines Kurbelantriebs (Figur 3) überträgt die Bohrmaschine das Antriebsmoment, beispielsweise über ein Dreibackenfutter, auf die Antriebswelle 2. Die Antriebswelle 2 ist in dem Gehäuse 4, 5 kugelgelagert, bevorzugt doppelt kugelgelagert. Zwischen den Lagerstellen befindet sich auf der Antriebswelle 2 ein Hubzapfen 33, der exzentrisch versetzt ist. Durch diesen Kurbelantrieb wird das Antriebsmoment über einen Pleuel 17 in eine translatorische Bewegung eines bevorzugt runden Gleitstückes 18 umgeformt. Zum Schutz gegen eine Verschmutzung des Kurbelantriebs ist ein Schutzring 19, der bevorzugt als Filzring ausgebildet ist, im Gehäuse 4, 5 angebracht. An dem Gleitstück 18 ist drehbar die Transportklinke 20 angeordnet. Diese treibt die zweite Schneideinheit 9 an.

Ein Rückstellglied 21 unterstützt dabei den zwangsgesteuerten Rücklauf der Transportklinke 20 und sorgt gleichzeitig für einen Anpressmoment der Transportklinke 20 an die zweite Schneideinheit 9.

In einer alternativen unter Bezugnahme auf die Figur 4 beschriebenen nicht erfindungsgemäßen Ausführungsform weist die Antriebseinheit 30 einen Kurvenscheibenantrieb auf. Auch hier überträgt die Bohrmaschine das Antriebsmoment über das Bohrmaschinenfutter auf die Antriebswelle 2. Die Antriebswelle 2 ist dabei bevorzugt als Sechskant ausgebildet, das in ein Dreibackenfutter einer Bohrmaschine eingespannt werden kann. Die Antriebswelle 2 ist im Gehäuse 4, 5 kugelgelagert, bevorzugt doppelt kugelgelagert und übergibt das Drehmoment auf eine Kurvenrolle 34. Auf dieser Kurvenrolle 34 ist eine Kurvenscheibe 26 angeordnet, die sich mit der Kurvenrolle dreht. Das auch bei dem Kurbelantrieb bereits erwähnte Gleitstück 18, das hier im Funktionsprinzip eines zentrischen Schiebers arbeitet, bewegt sich gleitend über den Außenrand der Kurvenscheibe 26. Somit wird die Rotationsbewegung der Antriebswelle beziehungsweise der Kurvescheibe in eine alternierende Translationsbewegung umgeformt. Das Gleitstück 18 ist rund und verhindert zusammen mit einem Schmutzabstreifer 35, dass der Kurvenscheibenantrieb verschmutzt.

In einer besonders bevorzugten Ausführungsform nimmt ein Freilauf das Drehmoment bei einer bestimmten Drehrichtung von der Antriebswelle 2 ab und gibt es auf eine Kurvenrolle 34 weiter. Der Freilauf ist dabei bevorzugt als Hülsenfreilauf ausgebildet, eine Rutschkupplung ist hier ebenfalls denkbar. Auf diese Weise wird bei einer nicht bestimmungsgemäßen Drehrichtung der Antriebswelle 2 das Drehmoment nicht abgenommen, da eine solche Drehrichtung aufgrund des geänderten Bewegungsablaufs der Kurvenrolle 34 zur Zerstörung der Zähne 29 an der zweite Schneideinheit 9 und der Transportklinke 20 führen kann.

In dem Gleitstück 18 ist die Transportklinke 20, wie oben bereits beschrieben, drehbar gelagert und schiebt, bevorzugt mit jeder Antriebswellenumdrehung, die zweite Schneideinheit 9 um einen Zahn 29 nach vorn. Auch hier sorgt ein Rückstellglied 21 für den passenden Anpressdruck des Gleitstücks 18 auf die Kurvenscheibe 26 und schiebt beim Rückhub die Transportklinke 20 zusammen mit den Gleitstück 18 zurück. Ein mitreisendes Andruckelement 25, das bevorzugt als Blattfeder ausgebildet ist, am Gleitstück 18 sorgt für den passenden Anpressdruck der Transportklinke 20 an die zweite Schneideinheit 9.

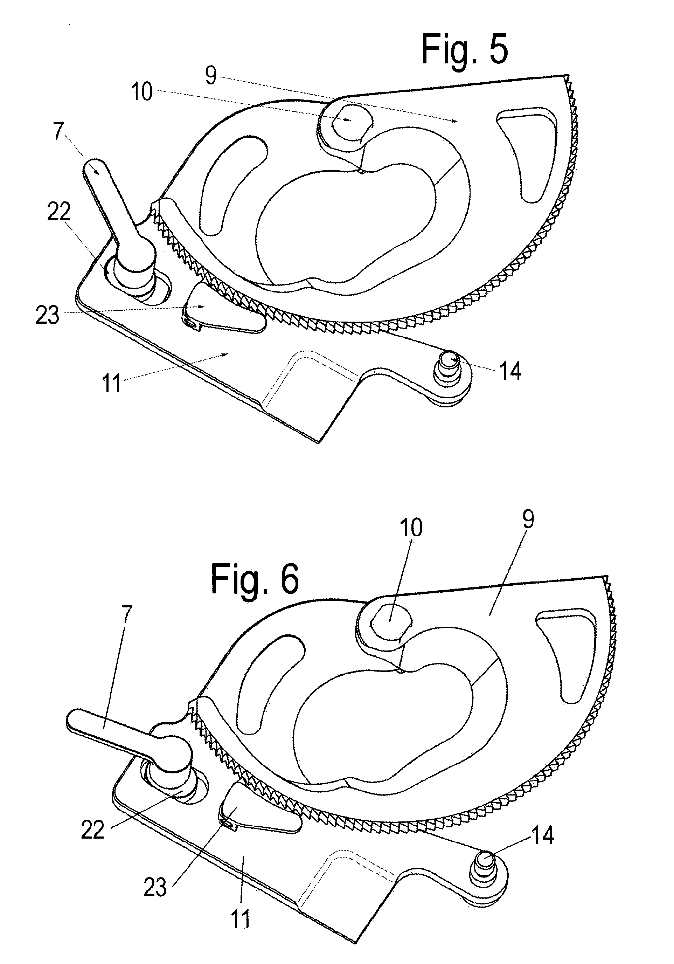

Anhand der Figuren 5 bis 7 wird die Funktion des außer Eingriff bringens von Antriebseinheit und zweiter Schneideinheit 9 beschrieben. Das Gehäuse 4, 5 ist durch ein Drehlager mit der ersten Schneideinheit 11 verbunden. An dem Gehäuse 5 ist des Weiteren ein Hebel 7 drehbar gelagert. Auf diesem Hebel ist exzentrisch ein weiterer Drehpunkt angeordnet, der einen Kulissenstein 22 in einer, bevorzugt prismatischen, Führung in der ersten Schneideinheit 11 schiebt. Da die erste Schneideinheit 11 drehbar an dem Gehäuse 4, 5 gelagert ist und die zweite Schneideinheit 9 drehbar an der ersten Schneideinheit 11 gelagert ist, bewegen sich somit beide Schneideinheiten 9, 11 in einer Drehbewegung aus dem Eingriff der Transportklinke 20 und der Sperrklinke 23. Aufgrund der gemeinsamen Bewegung erfolgt hierdurch kein weiteres Schneiden. Außerdem werden bei dieser Bewegung die Transportklinke 20 und die Sperrklinke 23 nicht belastet. Erst wenn die zweite Schneideinheit 9 aus dem Eingriff mit der Transport- 20 und der Sperrklinke 23 genommen ist, kann diese gegen die Schneidrichtung zum Befreien eines Kabels bewegt werden.

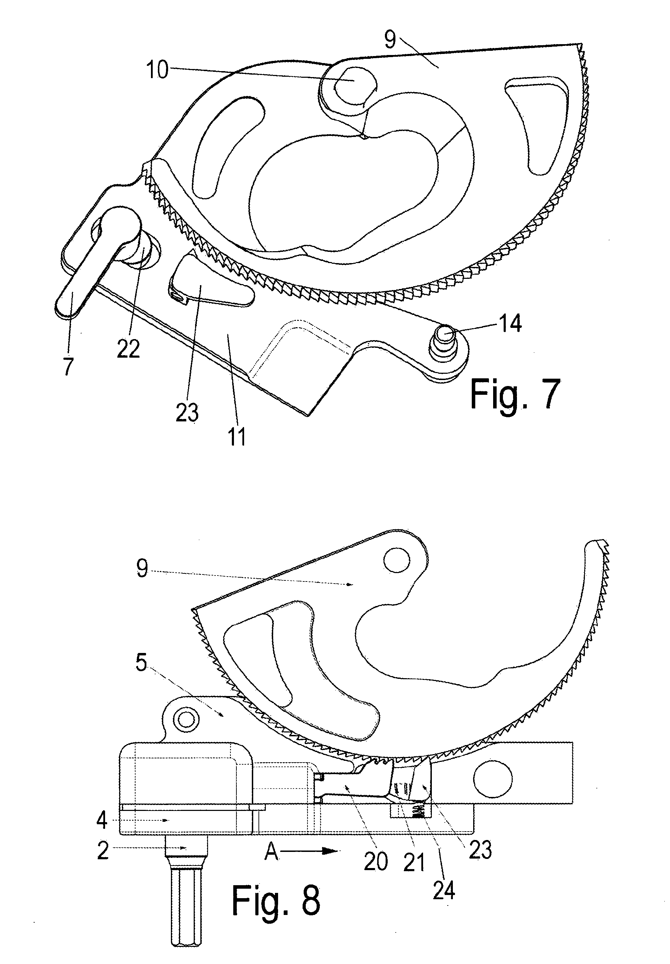

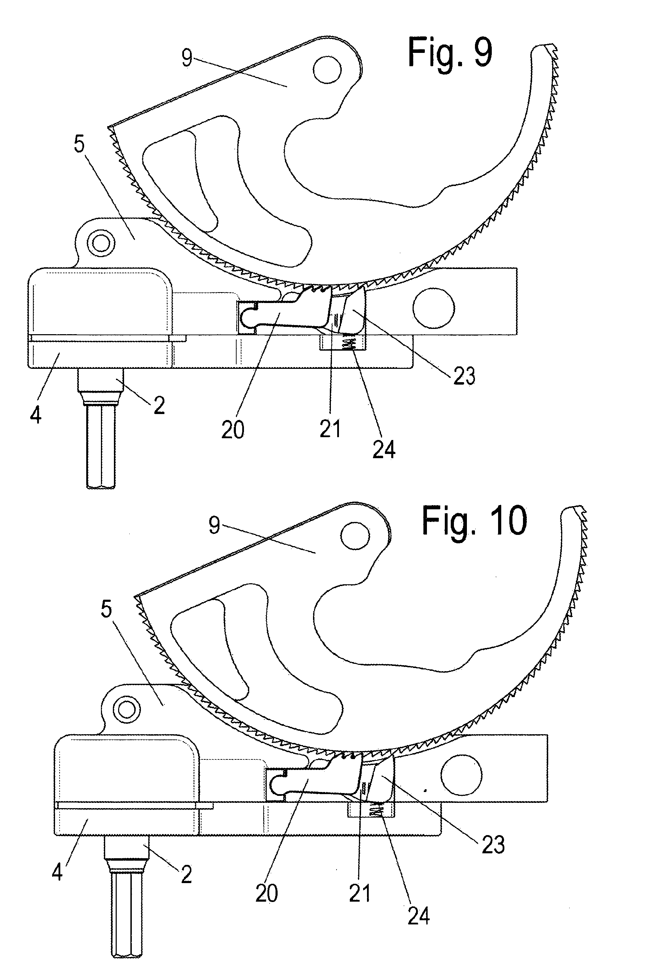

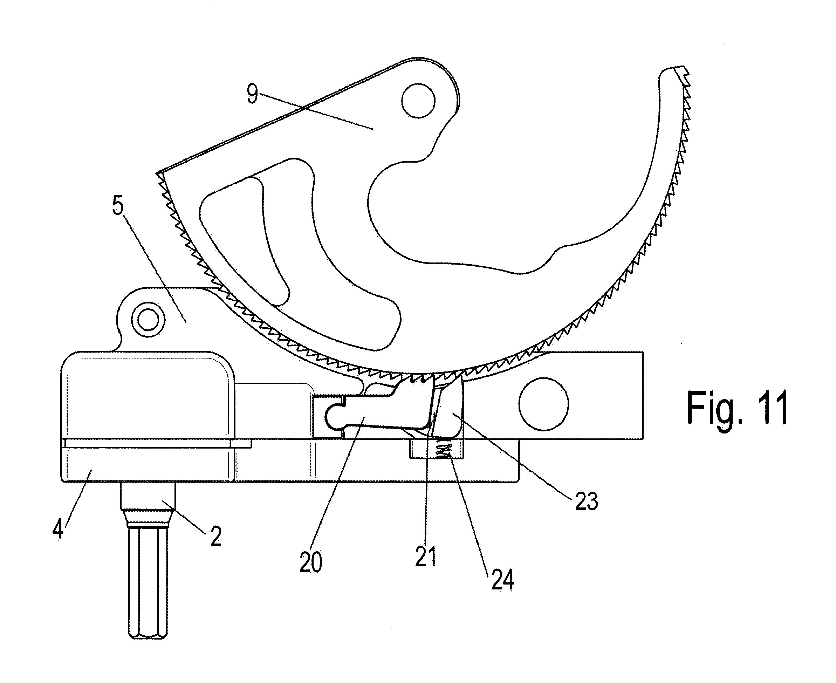

Anhand der Figuren 8 bis 11 wird nun beschrieben, wie die zweite Schneideinheit 9 durch eine Ratschenmechanismus bewegt wird. Durch Betätigen der Antriebseinheit 30 wird das Gleitstück 18 in eine alternierende translatorische Bewegung versetzt. Diese Bewegung des Gleitstücks 18 wird auf die Transportklinke 20 weitergeleitet. Die Transportklinke 20 ist bevorzugt drehbar in dem Gleitstück 18 angeordnet. Dazu ist auf der der Transportklinke 20 zugewandten Seite des Gleitstücks 18 eine pfannenartige Ausnehmung 31 in dem Gleitstück 18 vorgesehen und die Transportklinke 20 weist an dem den Gleitstück 18 zugewandten Ende eine in die pfannenartige Ausnehmung 31 passende Nase 32 auf. Dadurch ist in einfacher Weise ermöglicht, dass die Transportklinke 20 der gekrümmten Außenseite der Schneideinheit 9 sicher folgen kann. Die Transportklinke 20 transportiert zum einen die bewegliche zweite Schneideinheit 9 um jeweils einen Zahn 29 weiter, zum anderen wird ein Teil dieser Schubarbeit in einem Rückstellglied 21 gespeichert, welches zwischen der Transportklinke 20 und einer der Transportklinke 20 gegenüberstehenden Sperrklinke 23 angeordnet ist. Die in dem Rückstellglied 21 gespeicherte Energie wird später zum Andruck der Transportklinke 20 an das sich zurückziehende Gleitstück 18 benötigt. Das Rückstellglied 21 ist bevorzugt als Druckfeder ausgebildet.

Das Rückstellglied 21 ist des Weiteren so angeordnet, dass es neben der Speicherung der Arbeit für den Andruck an das Gleitstück 18 auch die Andruckkraft der Transportklinke 20 an die zweite Schneideinheit 9 sicher stellt.

Zum Andruck der Sperrklinke 21 an die zweite Schneideinheit 9 ist bevorzugt ein zweites Andruckelement 24 vorgesehen.

In den Figuren 7 bis 11 ist außerdem gut zu erkennen, dass die Zähne 29 der Verzahnung 28 so gestaltet sind, dass eine Kraft nur in Schneidrichtung eingeleitet werden kann und beim Rückhub die Sperrklinke 23 die zweite Schneideinheit 9 in Position hält, während die Transportklinke 20 über den Zahnrücken zum nächsten Zahn 29 abgleitet. Gleiches geschieht mit der Sperrklinke 23 beim Vorschub. Hier transportiert die Transportklinke 20 die zweite Schneideinheit 9 weiter, während die Sperrklinke 23 über den Zahnrücken zum nächsten Zahn 29 abgleitet. Bevorzugt wird mit jeder Antriebswellenumdrehung die zweite Schneideinheit 9 um einen Zahn 29 weiter transportiert. Da beide Bewegungen abwechselnd nacheinander stattfinden, entsteht eine alternierende Vorschubbewegung.

### Bezugszeichenliste

A Schubrichtung
1 Bohrmaschinenvorsatz
2 Antriebswelle
3 Kugellager
4 Erstes Gehäuseteil
5 Zweites Gehäuseteil
6 Passschraube
7 Hebel
8 Stützhülse
9 Erste Schneideinheit
10 Bolzen
11 Zweite Schneideinheit
12 Kulissenführung
13 Drehpunkt
14 Passschraube
15 Drehlager
16 Kugellager
17 Pleuel
18 Gleitstück
19 Filzring
20 Transportklinke
21 Rückstellglied
22 Kulissenstein
23 Sperrklinke
24 Andruckelement
25 Andruckelement
26 Kurvenscheibe
27 Gleitstück
28 Zahnrücken
29 Zahn
30 Antriebseinheit
31 Ausnehmung
32 Nase
33 Hubzapfen
34 Kurvenrolle
35 Schmutzabstreifer
36 Abdeckkappe
37 Schneidkante
38 Schneidkante
39 Klemmteil

## Patentansprüche

1. Bohrmaschinenvorsatz (1) zum Schneiden von Kabeln, aufweisend
a. ein Gehäuse (4, 5),
b. eine an dem Gehäuse (4, 5) angeordnete erste Schneideinheit (11) und eine scherenartig mit der ersten Schneideinheit (11) zusammenwirkende zweite Schneideinheit (9)
c. und eine mindestens eine der Schneideinheiten (9, 11) betätigende Antriebseinheit (30) mit einer um ihre Längsachse rotierbar gelagerten antreibbaren Antriebswelle (2),
d. wobei die Antriebseinheit (30) einen Kurbelantrieb und mindestens eine translatorisch alternierend bewegbare Transportklinke (20) aufweist, die mit mindestens einer der Schneideinheiten (9, 11) in Wirkverbindung steht, um die Schneideinheiten (9, 11) relativ zueinander zu bewegen,
**dadurch gekennzeichnet, dass**
e. der Kurbelantrieb einen auf der Antriebswelle (2) exzentrisch zur Antriebswelle (2) versetzt angeordneten Hubzapfen (33), ein translatorisch bewegbares Gleitstück (18) und ein den Hubzapfen (33) und das Gleitstück (18) verbindendes Pleuel (17) aufweist,
f. wobei die Transportklinke (20) drehbar auf der dem Pleuel (17) abgewandten Seite des Gleitstücks (18) angeordnet ist und
g. wobei das Gleitstück (18) zur drehbaren Anordnung der Transportklinke (20) auf der der Transportklinke (20) zugewandten Seite mit einer pfannenartigen Ausnehmung (31) und die Transportklinke (20) an dem dem Gleitstück (18) zugewandten Ende mit einer in die pfannenartige Ausnehmung (31) passenden Nase (32) versehen ist.

2. Bohrmaschinenvorsatz (1) nach Anspruch 1, **dadurch gekennzeichnet, dass** die zweite Schneideinheit (9) sichelförmig mit innen liegender Schneidkante (37) und außen liegender Verzahnung (28) ausgebildet ist.

3. Bohrmaschinenvorsatz (1) nach einem der vorstehenden Ansprüche, **dadurch gekennzeichnet, dass** die Antriebseinheit (30) des weiteren eine Sperrklinke (23) zur Verhinderung einer Bewegung der zweiten Schneideinheit (9) entgegen einer Schubrichtung (A) der Transportklinke (20) aufweist.

4. Bohrmaschinenvorsatz (1) nach Anspruch 3, **dadurch gekennzeichnet, dass** die Antriebseinheit (30) ein Rückstellglied (21) aufweist, das zwischen Sperr- (23) und Transportklinke (20) angeordnet ist und einer Bewegung der Transportklinke (20) auf die Sperrklinke (23) zu entgegenwirkt und welches geeignet ist, eine ausreichend große Energiemenge zum Zurückdrücken der Transportklinke (20) weg von der Sperrklinke (23) zu speichern.

5. Bohrmaschinenvorsatz (1) nach Anspruch 4, **dadurch gekennzeichnet, dass** das Rückstellglied (21) die Transportklinke (20) gegen die zweite Schneideinheit (9) drückt.

6. Bohrmaschinenvorsatz (1) nach Anspruch 4 oder 5, **dadurch gekennzeichnet, dass** das Rückstellglied (21) als Feder ausgebildet ist.

7. Bohrmaschinenvorsatz (1) nach einem der Ansprüche 3 bis 6, **dadurch gekennzeichnet, dass** die Antriebseinheit (30) ein Andruckelement (24) aufweist, das die Sperrklinke (23) gegen die Verzahnung (28) der zweiten Schneideinheit (9) drückt.

8. Bohrmaschinenvorsatz (1) nach einem der Ansprüche 2 bis 7, **dadurch gekennzeichnet, dass** die Verzahnung (28) der zweiten Schneideinheit (9) derart ausgebildet ist, dass eine von der Transportklinke (20) auf die Verzahnung (28) ausgeübte Kraft nur in Schneidrichtung der zweiten Schneideinheit (9) ausübbar ist.

9. Bohrmaschinenvorsatz (1) nach einem der Ansprüche 2 bis 8, **dadurch gekennzeichnet, dass** an dem Gehäuse (5) ein Hebel (7) drehbar gelagert ist, wobei der Hebel (7) exzentrisch an der ersten Schneideinheit (11) um einen zweiten Drehpunkt (13) drehbar gelagert ist, derart, dass mithilfe des Hebels (7) beide Schneideinheiten (9, 11) gegenüber dem Gehäuse (5) so bewegbar sind, dass die Verzahnung (28) der zweite Schneideinheit (9) außer Eingriff mit der Transportklinke (20) und der Sperrklinke (23) bringbar ist.

10. Bohrmaschinenvorsatz (1) nach Anspruch 9, **dadurch gekennzeichnet, dass** der Drehpunkt der zweite Schneideinheit (9) so angeordnet ist, dass das außer Eingriff bringen nur in eine Richtung entgegen der Schneidbewegung erfolgen kann.

11. Bohrmaschinenvorsatz (1) nach Anspruch 9 oder 10, **dadurch gekennzeichnet, dass** zur Lagerung des Hebels (7) in der ersten Schneideinheit (11) eine Führung vorgesehen ist, in der ein von dem Drehpunkt (13) verschiebbarer Kulissenstein (22) führbar ist.

## Claims

1. Drilling machine head piece (1) for cutting cables, comprising
a. a housing (4, 5),
b. a first cutting unit (11) arranged on housing (4, 5) and a second cutting unit (9) that cooperates with the first cutting unit (11) in the manner of scissors,
c. and a drive unit (30) actuating at least one of the cutting units (9, 11) with a drivable drive shaft (2) that is positioned rotatably around its longitudinal axis,
d. the drive unit (30) has a crank drive and at least one translationally alternating, movable transport ratchet (20), which is in a working connection with at least one of the cutting units (9, 11) in order to move the cutting units (9, 11) with relation to each other,
**characterized in that**
e. the crank drive has a lifting peg (33) that is arranged eccentrically with respect to drive shaft (2), a translationally movable sliding block (18) and a lifting peg (33) and a connecting rod (17) that connects the sliding block (18) with the sliding block (18),
f. whereby the transport ratchet (20) is arranged rotatably on the side of sliding block (18) that faces away from connecting rod (17), and
g. whereby the sliding block (18) for the rotatable arrangement of transport ratchet (20) on the side facing toward transport ratchet (20) is provided with a pan-like recess (31) and that transport ratchet (20) on the end facing toward sliding block (18) is provided with a nose (32) that fits into the pan-like recess (31).

2. Drilling machine head piece (1) according to claim 1, **characterized in that** the second cutting unit (9) is made sickle-shaped with interior cutting edge (37) and exterior gear toothing (28).

3. Drilling machine head piece (1) according to one of the above claims, **characterized in that** drive unit (30) furthermore has a locking ratchet (23) to prevent a movement of the second cutting unit (9) against a push direction (A) of the transport ratchet (20).

4. Drilling machine head piece (1) according to Claim 3, **characterized in that** drive unit (30) has a return member (21) that is arranged between the locking ratchet (23) and the transport ratchet (20) and counteracts a movement of the transport ratchet (20) upon the locking ratchet (23) and which is suitable for storing an adequate amount of energy for pressing the transport ratchet (20) back and away from locking ratchet (23).

5. Drilling machine head piece (1) according to Claim 4, **characterized in that** return member (21) presses transport ratchet (20) against the second cutting unit (9).

6. Drilling machine head piece (1) according to Claim 4 or 5, **characterized in that** return member (21) is made as a spring.

7. Drilling machine head piece (1) according to one of Claims 3 to 6, **characterized in that** drive unit (30) has a press-on element (24) that presses the locking ratchet (23) against the gear toothing (28) of the second cutting unit (9).

8. Drilling machine head piece (1) according to one of Claims 2 to 7, **characterized in that** the gear toothing (28) of the second cutting unit (9) is so shaped that a force exerted by transport ratchet (20) upon gear toothing (28) can be exerted only in cutting direction of the second cutting unit (9).

9. Drilling machine head piece (1) according to one of the claims 2-8, **characterized in that** upon the housing (5), there is rotatably positioned a lever (7), whereby lever (7) is rotatably positioned eccentrically on the first cutting unit (11) around a second pivotal point (13) in such a way that, with the help of lever (7), both cutting units (9, 11) can be moved with respect to housing (5), that the gear toothing (28) of the second cutting unit (9) can be disengaged from transport ratchet (20) and locking ratchet (23).

10. Drilling machine head piece (1) according to Claim 9, **characterized in that** the pivotal point of the second cutting unit (9) is so arranged that the disengagement can take place only in a direction against the cutting movement.

11. Drilling machine head piece (1) according to Claim 9 or 10, **characterized in that** for the positioning of lever (7) in the first cutting unit (11), there is provided a guide in which a block (22), which can be pushed by the pivotal point (13), can be guided.

## Revendications

1. Adaptateur pour machine à percer (1) servant à couper des câbles, présentant :
a. un boîtier (4, 5),
b. une première unité de découpage (11) disposée au niveau du boîtier (4, 5) et une deuxième unité de découpage (9) coopérant avec la première unité de découpage (11) à la manière de ciseaux,
c. et une unité d'entraînement (30) actionnant au moins une des unités de découpage (9, 11) et pourvue d'un arbre d'entraînement (2) logé de manière à pouvoir être entraîné en rotation autour de son axe longitudinal,
d. sachant que l'unité d'entraînement (30) présente un système d'entraînement à manivelle et au moins un cliquet de transport (20) pouvant être déplacé par translation en alternance, lequel cliquet de transport est en liaison fonctionnelle avec au moins une des unités de découpage (9, 11) afin de déplacer les unités de découpage (9, 11) l'une par rapport à l'autre,
**caractérisé en ce**
e. **que** le système d'entraînement à manivelle présente un maneton de levage (33) disposé sur l'arbre d'entraînement (2) de manière décalée et excentrée par rapport à l'arbre d'entraînement (2), une pièce coulissante (18) pouvant être déplacée par translation et une bielle (17) reliant le maneton de levage (33) et la pièce coulissante (18),
f. sachant que le cliquet de transport (20) est disposé de manière à pouvoir tourner sur le côté, opposé à la bielle (17), de la pièce coulissante (18), et
g. sachant que la pièce coulissante (18) servant à disposer de manière rotative le cliquet de transport (20) sur le côté tourné vers le cliquet de transport (20) est pourvue d'un évidement (31) en forme de cuve et que le cliquet de transport (20) est pourvu, au niveau de l'extrémité tournée vers la pièce coulissante (18), d'un ergot (32) s'adaptant à l'évidement (31) en forme de cuve.

2. Adaptateur pour machine à percer (1) selon la revendication 1, **caractérisé en ce que** la deuxième unité de découpage (9) est réalisée de manière à présenter une forme de croissant avec une arête de découpage (37) située côté intérieur et une denture (28) située côté extérieur.

3. Adaptateur pour machine à percer (1) selon l'une quelconque des revendications précédentes, **caractérisé en ce que** l'unité d'entraînement (30) présente par ailleurs un cliquet de blocage (23) servant à empêcher un déplacement de la deuxième unité de découpage (9) dans le sens opposé au sens de poussée (A) du cliquet de transport (20).

4. Adaptateur pour machine à percer (1) selon la revendication 3, **caractérisé en ce que** l'unité d'entraînement (30) présente un organe de rappel (21), qui est disposé entre le cliquet de blocage (23) et le cliquet de transport (20) et qui s'oppose à un déplacement du cliquet de transport (20) en direction du cliquet de blocage (23), et qui est adapté pour accumuler une quantité d'énergie suffisamment importante pour repousser le cliquet de transport (20) de manière à l'éloigner du cliquet de blocage (23).

5. Adaptateur pour machine à percer (1) selon la revendication 4, **caractérisé en ce que** l'organe de rappel (21) pousse le cliquet de transport (20) contre la deuxième unité de découpage (9).

6. Adaptateur pour machine à percer (1) selon la revendication 4 ou 5, **caractérisé en ce que** l'organe de rappel (21) est réalisé sous la forme d'un ressort.

7. Adaptateur pour machine à percer (1) selon l'une quelconque des revendications 3 à 6, **caractérisé en ce que** l'unité d'entraînement (30) présente un élément de pression (24), qui pousse le cliquet de blocage (23) contre la denture (28) de la deuxième unité de découpage (9).

8. Adaptateur pour machine à percer (1) selon l'une quelconque des revendications 2 à 7, **caractérisé en ce que** la denture (28) de la deuxième unité de découpage (9) est réalisée de telle manière qu'une force exercée par le cliquet de transport (20) sur la denture (28) peut être exercée uniquement dans le sens de découpage de la deuxième unité de découpage (9).

9. Adaptateur pour machine à percer (1) selon l'une quelconque des revendications 3 à 7, **caractérisé en ce qu'**un levier (7) est monté de manière à pouvoir tourner au niveau du boîtier (5), sachant que le levier (7) est monté de manière à pouvoir tourner autour d'un deuxième point de rotation (13) de manière excentrique au niveau de la première unité de découpage (11), de telle manière que les deux unités de découpage (9, 11) peuvent être déplacées, à l'aide du levier (7), par rapport au boîtier (5) de telle manière que la denture (28) de la deuxième unité de découpage (9) peut être amenée dans une position désengagée avec le cliquet de transport (20) et le cliquet de blocage (23).

10. Adaptateur pour machine à percer (1) selon la revendication 9, **caractérisé en ce que** le point de rotation de la deuxième unité de découpage (9) est disposé de telle manière que le désengagement ne peut se faire que dans un sens opposé au mouvement de découpage.

11. Adaptateur pour machine à percer (1) selon la revendication 9 ou 10, **caractérisé en ce qu'**est prévu, afin de loger le levier (7) dans la première unité de découpage (11), un système de guidage, dans lequel un coulisseau (22) pouvant être déplacé par coulissement par le point de rotation (13) peut être guidé.
